# EUROPEAN PATENT APPLICATION

(11) **EP 2 161 093 A1**
(43) Date of publication of application: **10.03.2010**
(21) Application number: 09250929.8
(22) Date of filing: 30.03.2009
(51) Int. Cl.: B23K 9/02, B23K 9/04, B23K 9/167, B23K 9/23, B23K 9/235

(54) **Method of and System for AC TIG welding of aluminium aircraft engine components within an enclosure and removing of welding porosities**

(30) Priority: 25.08.2008 SG 200806291; 22.09.2008 US 235137
(71) Applicant: Eagle Services Asia Private Limited, Singapore 509927 (SG)
(72) Inventor: Prochazka, Zdenek, The Springfield 486526 (SG)
(74) Representative: Hall, Matthew Benjamin

(57) **Abstract**

A porosity free weld (55) is formed at the surface of an aluminum object (51). The object (51) is enclosed in a welding box that is sealed and purged with an inert gas, and preheated to at least 100 °C. Welding of one pass of the weld using a gas-tungsten arc welding method with AC current and shielding gas mixture of argon and helium is followed by removal of the top portion of the bead (55). The process of preheating, formation of a weld bead (55) and top portion removal are repeated to achieve the desired weld thickness or build-up.

## Description

High quality and defect free aluminum welds are of high interest in various industrial applications. Superior aluminum welds are required in manufactured products to ensure their proper function, service life, safety and reliability as well as can provide valuable savings when repairing aluminum components.

Recently, concerns have risen in the aircraft engine industry about the inherent defects in aluminum welds. These defects, such as porosity, inclusions and cracks, may significantly affect the structural properties such as tensile strength, toughness, and elongation of welds. There is also a high likelihood of stress concentrations resulting in crack initiation and propagation from porosity shortly after a component is repaired. In order to avoid these discontinuities being left in repaired components, aluminum welding repairs have been revised to include a mandatory post-welding X-ray inspection.

Gas-tungsten arc welding (GTAW) is a known process that melts and joins metals by heating them with an arc established between a non-consumable tungsten electrode and the metals. The arc also melts the added filler metal. The torch holding the tungsten electrode is connected to a shielding gas that streams out of the welding torch and screens off the glowing tungsten electrode and welding pool from the surrounding air. There are several modifications of GTAW technique that differ in polarity of the tungsten electrode and base metal. Both direct current (DC) and alternating current (AC) are used for aluminum welding. The current type and electrode polarity influence the amount of heated material, fusion, penetration and oxide contamination. Three types of known arc generation include direct current with the electrode negative (DCEN), direct current with the electrode positive (DCEP), and alternating current (AC).

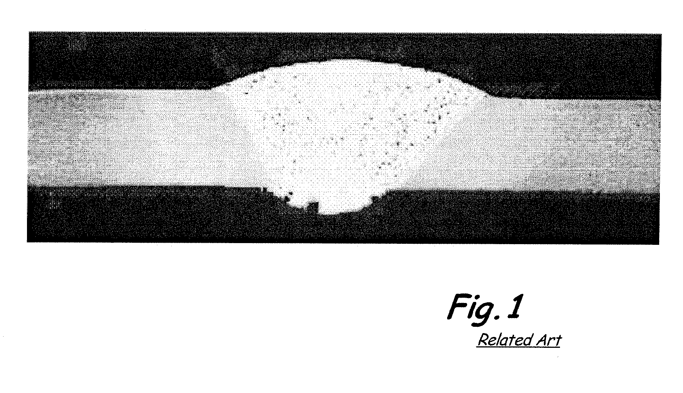

Welding of aluminum alloys is often accompanied by the development of unwanted gas porosity during solidification of the weld due to reduced solubility of dissolved hydrogen. Fig. 1 illustrates an example of weld porosity in an aluminum part (Fig. 1 is from G. Mathers The Welding of Aluminum and Its Alloys, Woodhead Publishing Ltd., 2002). Porosity appears when the hydrogen dissolved in aluminum becomes trapped as the weld solidifies and forms bubbles in the solidified weld. This means that the amount of porosity will increase with increasing welding speed (travel speed of the torch). An alloy composition such as, but not limited to, a composition including magnesium may also influence the amount of porosity by changing the solubility of hydrogen. Magnesium raises the solubility and reduces absorption of hydrogen by as much as twice at 6% Mg. Copper and silicon have the opposite effect.

The majority of hydrogen absorption appears to take place around the outer edge of the weld pool and monoatomic hydrogen absorption dominates the contribution to the hydrogen content. However, the dissolution process alone does not determine the hydrogen content in the resultant weld metal. Rejection of the dissolved hydrogen atoms by the advancing solidification front and diffusion of the hydrogen atoms from the weld pool are also considered. Hydrogen porosity can severely reduce both the strength and ductility of aluminum welds as well as reduce the fatigue resistance of aluminum welds. Although round gas pores can be randomly distributed in the weld metal, they can also line up and form bands of porosity.

Conventional aluminum welding has been performed using GTAW alternating current, in the "open air", i.e. with no control of the ambient atmosphere. As a result, contamination of the weld pool by atmospheric hydrogen was more a guarantee than a random phenomenon. Also, using pure argon as a shielding gas results in a colder process with lower fusion, lower weld pool temperature and shorter residence in molten state leading to extensive porosity entrapped in the weld. Moreover, proper cleaning of parent material surface and filler wire sufficient to prevent introduction of contamination was generally not practiced. The surface of parent material was gouged and wire brushed using the compressed-air powered tools. These tools in fact bring the stream of air, often contaminated by oil particulates, directly to the virgin surface of the freshly scraped/brushed surface causing the extensive oxidation of the surface. This oxide together with surface adsorbates/condensates are common sources of porosity and inclusions in aluminum welds. Welding was done in a pass-by-pass manner without any weld material removal in between individual passes, which resulted in the porous material being present in the weld. X-ray inspection revealed pores and inclusions in the welds prepared by means of this technique.

Because of an upward trend in number of aluminum components requiring welding repair due to natural aging of aircraft engines/components and increasing scrap rate due to inability to perform defect free welding of aluminum, a new aluminum welding technique that will be able to pass the X-ray inspection is desired.

A method and system of forming a porosity free aluminum weld or weld build-up to a predetermined thickness has been developed.

Viewed from a first aspect, the present invention provides a method of applying a substantially porosity free weld to an aluminum object, comprising the steps of:
(a) applying a material to the object in an enclosed environment using AC current gas-tungsten arc welding;
(b) removing a portion of the applied material containing porosity while maintaining the object in the enclosed environment; and
(c) repeating steps (a) and (b) until a predetermined thickness or weld build-up of the applied material is achieved.

Viewed from another aspect, the present invention provides a porosity free weld of a predetermined thickness or weld build-up on an aluminum object, the weld formed by:
(a) applying a material to the object in an enclosed inert gas environment using AC current gas-tungsten arc welding;
(b) removing a portion of the applied material while maintaining the object in the enclosed environment; and
(c) repeating steps (a) and (b) until the predetermined thickness or weld build-up is achieved.

Viewed from a third aspect, the present invention provides a system for forming a porosity free weld to an aluminum object to a predetermined thickness or weld build-up, comprising:
(a) an AC current gas-tungsten arc welding apparatus for applying a material to the object;
(b) an enclosure for maintaining the object in an inert gas environment during welding; and
(c) a material removal apparatus positioned within the enclosure for removing a portion of the applied material containing porosity while the object is in the inert gas environment.

Thus, in one preferred embodiment, the area of a cleaned and scraped object to be welded is enclosed in a welding box. The box is sealed and purged with an inert gas such as argon. Removal of surface layers and cleaning the weld wire prior to insertion of the wire into the argon filled welding box may be performed. The object is then preheated to a temperature in excess of 100 °C. One pass of weld bead is formed using a gas-tungsten arc welding technique at predetermined AC amperage and with a supply of shielding gas, such as argon, helium and mixtures thereof. Welding is followed by removal of a portion of the weld's thickness. The portion of the weld pass with the entrapped porosity that is to be removed may range between 25% and 50%. The porous portion of each weld pass may be removed and additional nonporous layers may be built. The process steps of preheating, formation of a weld bead and top portion removal may be repeated to achieve the desired weld thickness or build-up. The object is then removed from the welding box; the welded area is made flush slightly above the contour of the object by grinding or polishing to prepare the part for subsequent heat treatment and X-ray inspection.

Certain preferred embodiments of the present invention will now be described in greater detail by way of example only and with reference to the accompanying drawings, in which:
FIG. 1 shows a photograph of finely distributed porosity in an aluminum aircraft part;
FIG. 2 is a block diagram illustrating an exemplary method;
FIG. 3 is a perspective view of a welding box for use in the exemplary method and system of FIG. 2;
FIGS. 4A and 4B are schematic views of the components of an exemplary gas tungsten arc welding process showing application of a weld bead and thereafter removing a portion of the bead;
FIGS. 5A and 5B respectively show photographs illustrating the comparison in porosity before and after using the exemplary method and system;
FIG. 6 shows a photograph of exemplary weld build-up sample with improved porosity; and
FIG. 7 shows more photographs of exemplary weld build-up sample with improved porosity.

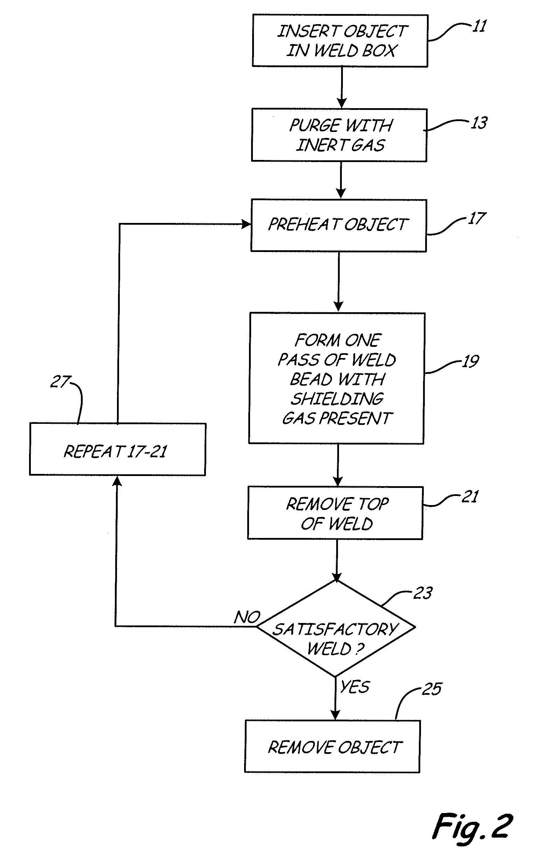

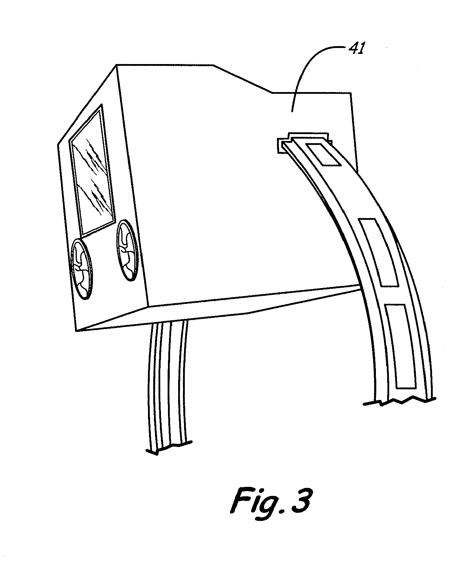

An exemplary welding process and system is shown in the block diagram of Fig. 2. In step 11, an aluminum object to be welded is inserted into a welding box after the object has been scraped, cleaned and prepared for welding. Pre-weld cleaning of the parent metal of the object facilitates achieving low levels of porosity and preventing a lack of fusion. As shown in Fig. 3, an exemplary weld box 41 has two or more glove like openings that allow the worker to perform tasks such as welding inside the box 41 under a sealed environment. The weld box 41 may be fabricated from cardboard, for example, and sealed with duct tape. The whole inner surface of the box may be covered by protective tape as well.

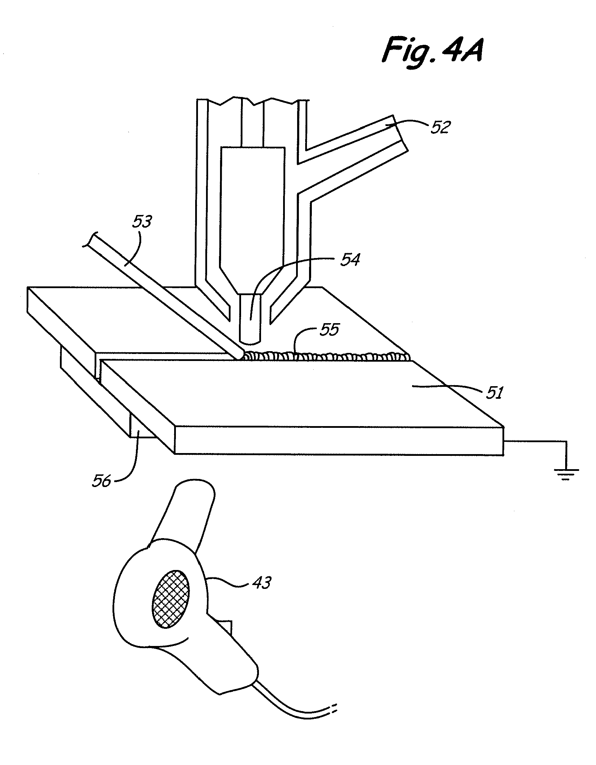

Once the object is inside weld box 41, step 13 purges the inside of the welding box 41 with an inert gas such as argon. For example, Fig. 4A illustrates a portion of an aluminum metal substrate or object 51 supported on a heat sink, such as a copper shoe 56, located inside the weld box 41. Shielding gas flows from an inlet 52 during the welding process described below to further facilitate preventing any contaminants from contacting the aluminum metal object 51 being welded, a weld wire or an electrode.

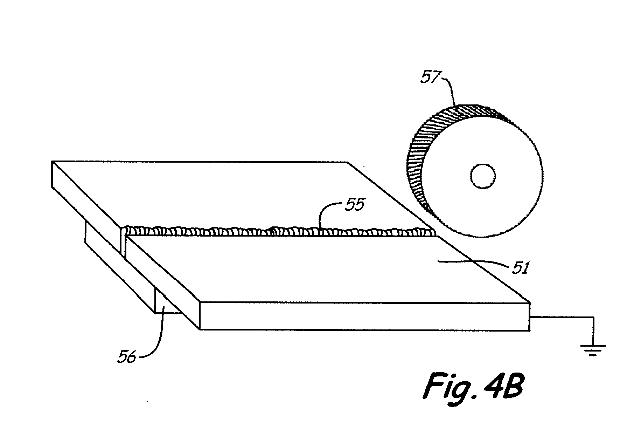

The exemplary process and system of Fig. 2 will be further described with references to the apparatus of Figs. 4A and 4B. The object 51 is preheated in step 17 to prepare the object 51 for welding to an elevated temperature using a heater such as a hot air torch 43. Preheat temperatures of 100 °C or higher are desirable since at such temperatures any moisture will be driven off.

Step 19 includes an actual gas tungsten arc welding step where weld material such as a weld wire 53 is melted by means of electric arc established between a tungsten electrode 54 and the object 51 to form a first pass weld bead 55. Once the weld bead 55 is complete, the operator moves the object to remove the top of weld bead 55 by grinding with a file or grinding wheel 57 located inside weld box 41 as shown in Fig. 4B. The welded object 51 is examined to determine if the welding is done to industry standards. If it is satisfactory, the object 51 is removed from the weld box 41 in step 25. If the worker determines that the weld build-up is not complete or has not reached a predetermined thickness after the top of the bead 55 has been removed, step 23 provides for steps 17-21 to be repeated without removing the object until reaching the intended weld build-up.

Both helium and argon can be used as shielding gas for GTAW welding. The ionization potentials for helium and argon are 24.5 eV and 15.7 eV, respectively. Due to the higher ionization energy of helium compared to argon, a greater welding voltage (approximately 75 % greater) provides substantially the same amount of amperage and this leads to a higher thermal input into the object workpiece. The higher heat conductivity of helium is another advantage as compared to the argon. It results in an increased welding speed, lower pre-heat temperatures at substantially the same penetration, and a lower tendency for porosity by a hotter weld pool with lower viscosity and better degasification possibilities. On the other hand, arc initiation is easier and the voltage drop across the arc is lower with argon because it is easier to ionize argon than helium. Also, since argon is heavier than helium, it offers more effective shielding and greater resistance to cross draft than helium. With DCEP or AC, argon also has a greater oxide cleaning action than helium. These advantages plus the lower cost of argon make it more attractive for GTAW than helium. In some cases, mixtures of argon and helium result in a usable compromise. However, due to helium's lower specific weight, comparatively more helium than argon has to be used for gas shielding purposes.

The welding arc is sustained by plasma that forms by ionization of the shielding gas. Besides influence on heat transfer during welding, shielding gas also protects the arc and molten pool from contamination. A 50:50 mixture by volume of argon and helium gases was used as a shielding gas in a number of examples. This mixing ratio yielded combined advantages of both gases. For example, argon provides easier arc ignition due to its lower ionization potential; it is heavier than helium, and thus, provides better arc and molten pool shielding and surface oxide removal. Helium's higher ionization potential, low electric conductivity and higher thermal conductivity results in higher thermal input into the object workpiece providing hotter weld pool of lower viscosity with lower tendency for porosity entrapment. The flow rate of shielding gas was 20 L/min at which value there was no disruption of molten pool by the gas flow.

A collet body with a gas lens may be used to introduce shielding gas inside of the weld box 41. The purpose of a gas lens is to make the shielding gas exit the inlet nozzle as a column instead of as a turbulent stream of gas that begins to spread out after exiting. The column of gas allows the electrode 54 to stick out farther into the weld box 41 to facilitate visibility, access to the weld area, and a reduction in gas flow.

In the exemplary welding technique, high alternating currents of 170 to 200 amps may be used to provide sufficient heat input to melt and fuse the filler wire material with parent metal of object 51. It is recommended to use high current settings even though less than full power is used during the welding process. The heat input can be then be adjusted accordingly, e.g., when the melting of parent metal is not sufficient, by pushing a control pedal. When terminating the weld, the molten pool should be solidified prior to terminating the arc and the welding torch should remain over the stop area during solidification with sufficient gas post flow. To the contrary, extinguishing the arc at welding current will result in craters and crater cracks.

The gases used in the gas-shielded processes can also be a moisture source, which may be overlooked. Ideally, gases with a dew point of less than -50 °C (39 ppm water) should be used to facilitate ensuring that when gases are delivered to the weld pool they have maintained this high degree of purity. Therefore, the gas supply system should be checked at regular intervals for leaks, so that damaged hoses are replaced immediately and joints are sound. Screwed or bolted flanged connections are also potential sources of contamination and leaks that may be avoided by the use of a brazed or welded system.

As for the weld wire 53, contaminants are normally on the surface because filler wires are metallurgically clean. A larger diameter of weld wire will have less surface area than a smaller diameter for a given volume of deposited weld metal. Larger diameters are also easier to feed by pushing. However, a diameter that increases the heat requirement beyond that suitable for the parent metal is to be avoided. In the exemplary experiments described below, the filler wire was at first brushed uni-directionally with Scotch Brite® cleaning product (3M Company) and cleaned with a lint free cloth soaked in alcohol. After cleaning, the wire was immediately inserted into the box filled with argon protecting the welding area. Once the wire has been cleaned, it should not be handled with bare hands. A clean pair of gloves should be used and welding should be performed within a short time of cleaning. During welding, the wire should be fed into the leading edge of the weld pool and kept within the shielding of the torch gas.

If the weld pass is interrupted for any reason, any defects should be inspected and corrected rather than welding over them. For example, craters, cracks, cold laps, porosity, etc. should be mechanically removed. Welding over crater cracks will tend to propagate them deeper. Welding over porosity will tend to grow and spread the porosity. Also, prior to welding multiple passes, a top portion of each pass is likely to contain porosity. Therefore, the top portion should be mechanically removed and remaining material should be visually inspected for defects. The portion removed is about 25% and 50% of each pass. Liquid penetrant is not recommended for interpass weld inspection because the liquid may be entrapped in the weld surface and provide a source of contamination for the subsequent weld pass.

In a series of experiments, aluminum materials of engine components were welded. For these experiments a 6061 aluminum alloy was selected along with a filler wire of 4043 aluminum alloy. Compared to aluminum alloys with low silicon content, a higher silicon content in this alloy improves fluidity during welding and inhibits the sensitivity to hot cracking. However, the porosity in the aluminum welds is due to the different sources of contamination. The main cause is hydrogen that can form pores up to 4 mm in size due to its decrease in solubility in aluminum during solidification. Therefore, the exemplary methods and systems facilitate eliminating or minimizing several sources of contamination in order to achieve a more defect free aluminum weld.

The exemplary welding method used in the experiments employs GTAW with alternate current to provide sufficient heating as well as cathodic cleaning of the weld pool. AMS 4190 filler wire with diameter of 3/32 inch (2.4 mm) was used. Several parameters (namely current settings, gas composition and flow rates, welding atmosphere) and their influence on the weld purity were observed. The parameters taken into account are described below. Welding was performed inside the weld box filled with argon purging or backup gas and mixture of argon and helium gases was used as a shielding gas for GTAW.

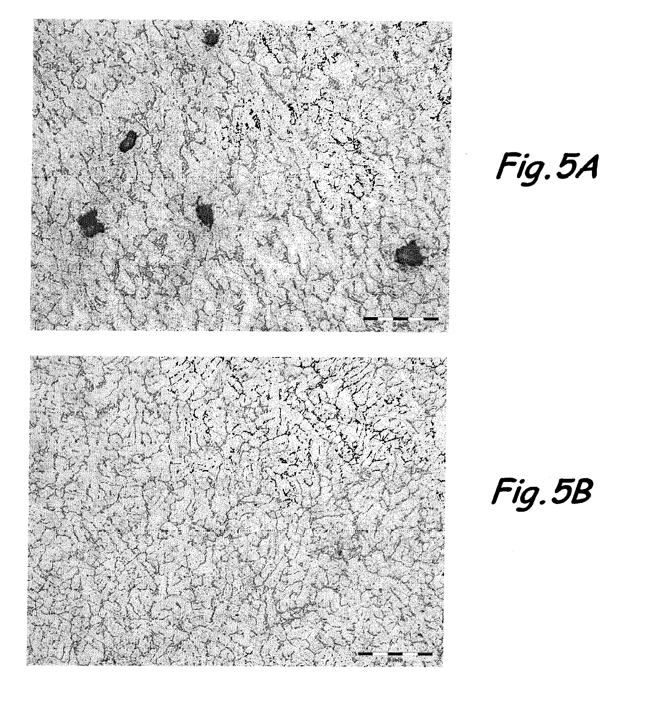

After those experiments, several cutouts from fan exit outer case components were used to prepare one-pass weld samples. After welding, the welds were X-ray inspected. Evaluation of welds, using an optical microscope, was aimed at observation of the presence and distribution of porosity within the weld. Examples of micrographs showing actual weld samples with and without porosity are shown in Figs. 5A and 5B.

From the experimental results obtained, it was found that higher arc current, ranging from 170 to 200 amps, and helium gas addition into the shielding gas have positive effects on quality of welds in terms of porosity and fusion. Also, using an argon atmosphere too facilitated reducing the porosity.

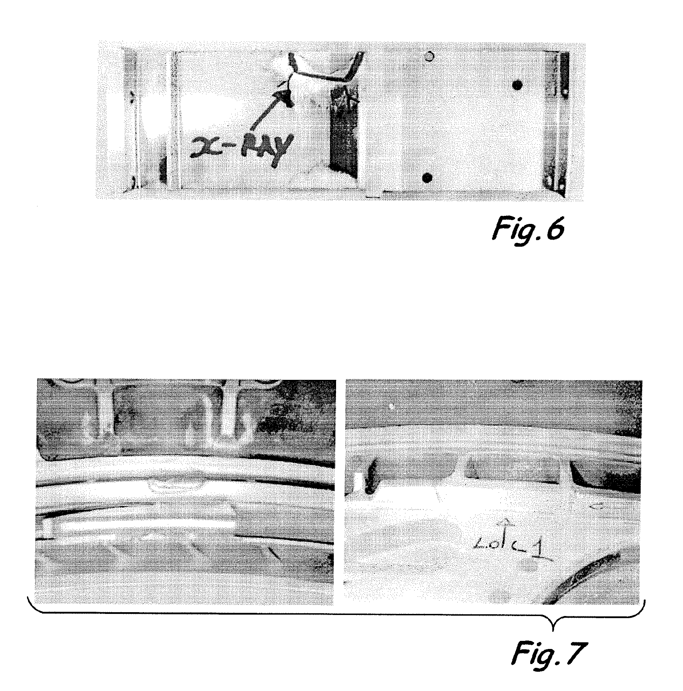

The next set of experiments included producing the multipass-weld build up of the fan exit outer case wall. A section of the wall was mechanically removed from the wall and weld built up back to dimensional requirements. The effort was focused on the development of a strategy of how to stack the weld beads (position of the bead and direction of welding with regards to the geometry of the parent metal). Fig. 6 is a photograph of the wall with the weld built up area, adjacent to a top edge. There were no fmdings of porosity during the X-ray inspection.

More experiments on a fan exit inner case designated for development purposes were used to prepare the weld sample that was physically and geometrically similar to the defect to be welded on the live part in the future, as shown in Fig. 7. An arrow points to the weld in Fig. 7. During this trial, welding was performed in a constrained area due to part geometry and diverse shape. Again, X-ray inspection did not reveal any defects in the produced weld and thus the exemplary methods and systems facilitated repeatability and reproducibility of the exemplary process.

Although the present invention has been described with reference to exemplary embodiments, workers skilled in the art will recognize that changes may be made in form and detail without departing from the scope of the invention.

## Claims

1. A method of applying a substantially porosity free weld to an aluminum object, comprising the steps of:
(a) applying a material to the object in an enclosed environment using AC current gas-tungsten arc welding;
(b) removing a portion of the applied material containing porosity while maintaining the object in the enclosed environment; and
(c) repeating steps (a) and (b) until a predetermined thickness or weld build-up of the applied material is achieved.

2. The method of claim 1, further comprising the step of supplying a shielding gas to the object during welding.

3. The method of claim 2, wherein the shielding gas is selected from at least one of argon, helium and mixtures thereof.

4. The method of claim 3, wherein the shielding gas is a 50:50 mixture of argon and helium by volume.

5. The method of any preceding claim, further comprising the step of preheating the object to a temperature in excess of 100 °C prior to step (a).

6. The method of any preceding claim, wherein the AC current gas-tungsten welding includes an amperage ranging from 170 amps to 200 amps.

7. The method of any preceding claim, wherein the enclosed environment is purged with an argon purging gas.

8. The method of any preceding claim, wherein the portion removed in step (b) is between 25% and 50% of each pass to remove porosity.

9. A system for forming a porosity free weld to an aluminum object to a predetermined thickness or weld build-up, comprising:
(a) an AC current gas-tungsten arc welding apparatus for applying a material to the object;
(b) an enclosure for maintaining the object in an inert gas environment during welding;
and
(c) a material removal apparatus positioned within the enclosure for removing a portion of the applied material containing porosity while the object is in the inert gas environment.

10. The system of claim 9, further comprising a source of a shielding gas for applying the shielding gas to the object during welding.

11. The system of claim 10, wherein the shielding gas is selected from at least one of argon, helium and mixtures thereof.

12. The system of claim 11, wherein the shielding gas is a 50:50 mixture of argon and helium by volume.

13. The system of any of claims 9 to 12, further comprising a heater for preheating the object to a temperature in excess of 100 °C prior to welding.

14. The system of any of claims 9 to 13, wherein the AC current gas-tungsten welding apparatus uses an amperage ranging from about 170 amps to about 200 amps.

15. The system of any of claims 9 to 14, wherein the material removal apparatus is adapted to remove between 25% and 50% of each layer of the applied material.
